# EUROPÄISCHE PATENTSCHRIFT

(11) **EP 0 769 874 B1**
(45) Veröffentlichungstag und Bekanntmachung des Hinweises auf die Patenterteilung: **27.12.2000**
(21) Anmeldenummer: 96115950.6
(22) Anmeldetag: 04.10.1996
(51) Int. Cl.: H04N 5/60, H04R 3/12

(54) **Audioverstärkeranordnung für mehr als zwei Wiedergabekanäle**
Audio amplifier arrangement for more than two reproduction channels
Assemblage amplificateur audio pour plus de deux canaux de reproduction

(30) Priorität: 19.10.1995 DE 19539034
(43) Veröffentlichungstag der Anmeldung: 23.04.1997
(73) Patentinhaber: NOKIA TECHNOLOGY GmbH, 75175 Pforzheim (DE)
(72) Erfinder: Schaar, Reinhard, 75334 Straubenhardt 4 (DE)
(74) Vertreter: Stendel, Klaus

(56) Entgegenhaltungen:
- EP-A- 0 383 535
- EP-A- 0 412 260
- EP-A- 0 584 719
- WO-A-93/25008
- DE-A- 4 030 121
- US-A- 5 161 198
- PATENT ABSTRACTS OF JAPAN vol. 16, no. 64 (E-1167), 18.Februar 1992 & JP 03 258176 A (SHARP), 18.November 1991,

## Beschreibung

Die Erfindung betrifft eine Audioverstärkeranordnung für mehr als zwei Wiedergabekanäle mit Verstärkerausgängen, die von einem Nutzer auf verschiedene Weise mit Lautsprechern beschaltet werden können. Eine solche Audioverstärkeranordnung ist vorzugsweise für die räumliche Wiedergabe von Schallereignissen insbesondere nach dem bekannten Dolby-Surround-Soundsystem der Fa. Dolby Laboratories, San Francisco, USA vorgesehen. Die Audioverstärkeranordnung wird von einem Dolby-Pro-Logic-Prozessor gespeist, der die folgenden vier Ausgangskanäle aufweist:
- je ein Kanal mit Seiteninformation für die Kanäle Rechts (R) und Links (L), zum Betreiben von Lautsprechern, die rechts und links vom Hörer angeordnet sind,
- einen Center-Kanal (C) für Mitteninformation zum Betreiben eines Lautsprechers, der vor dem Hörer mittig angeordnet ist,
- und einen Surround-Kanal (SR) für Umgebungsgeräusche, an dem zwei Lautsprecher angeschlossen sind, die rechts und links hinter dem Hörer angeordnet sind.

An ein Fernsehgerät, das eine Dolby-Pro-Logic-Anordnung aufweist, müssen zum Beispiel auch die genannten fünf Lautsprecher in der Regel in Form von Lautsprecherboxen angeschlossen werden, um eine entsprechende Wiedergabequalität zu erreichen. Im Vergleich zu einem konventionellen Fernsehgerät mit einem Stereotonteil stellt dieses Erfordernis einen erheblichen Mehraufwand beim Nutzer dar. Aus diesem Grunde werden Fernsehgeräte mit einer Dolby-Pro-Logic-Anordnung im allgemeinen vom Hersteller ohne separate Lautsprecherboxen ausgeliefert. Das Gerät enthält, wie bisher, interne Gehäuselautsprecher zum Wiedergeben von Rechts- und Linksinformation und der Nutzer kann wahlweise in einem von ihm gewünschten Umfang externe Lautsprecherboxen anschließen. Dabei ergeben sich neben den beiden extremen Betriebsarten: "Betrieb mit internen Lautsprechern aber ohne externe Lautsprecherboxen" und "Betrieb nur mit externen Lautsprecherboxen" insbesondere für eine Beschaltung der Seitenkanäle (R und L) und des Center-Kanals (C) weitere sinnvolle Kombinationen, die zwar keine Surround-Wiedergabe in vollem Qualitätsumfang ermöglichen, jedoch eine wesentliche Verbesserung der Wiedergabequalität gegenüber einer Wiedergabe allein über interne Lautsprecher bewirken.

So ist es einerseits möglich, an das Fernsehgerät extern ein Lautsprecherboxenpaar für die Wiedergabe der Seiteninformationen ohne eine Box für den Center-Kanal anzuschließen. In einem solchen Fall werden sinnvollerweise die internen Lautsprecher ausschließlich für die Wiedergabe der Center-Information genutzt. Andererseits ist es möglich, an das Fernsehgerät extern eine Lautsprecherbox für die Wiedergabe des Center-Kanals anzuschließen und die Seiteninformation über die internen Lautsprecher wiederzugeben. Eine weitere Kombinationsmöglichkeit besteht in der Nutzung einer externen HiFi-Anlage. Auch in diesem Fall ist es sinnvoll, über die internen Lautsprecher die Center-Information wiederzugeben.

Aus den Darlegungen wird das technische Problem ersichtlich, das der Erfindung zu Grunde liegt. Die verschiedenen Beschaltungsvarianten mit externen Lautsprechern erfordern eine Steuerung, die einerseits bei bestimmten Varianten die internen Lautsprecher abschaltet und die andererseits die internen Lautsprecher mit verschiedenen Signalen versorgt. Während das Problem des Abschaltens der internen Lautsprecher mit bekannten Lautsprecherschaltbuchsen lösbar wäre, ist das Problem der unterschiedlichen Signalversorgung mit derartigen Buchsen nicht lösbar. Die Lösung des Problems wird dadurch noch erschwert, daß einerseits in dem Fall, wo weder am Center-Kanal noch an den Seitenkanälen externe Lautsprecher angeschlossen sind, die internen Lautsprecher mit einem Signal betrieben werden, bei dem im Signalprozessor der Seiteninformation Center-Information überlagert wird. Das heißt, sowohl beim Anschluß einer Lautsprecherbox für den Center-Kanal, als auch bei Anschluß von Lautsprecherboxen für die Seitenkanäle muß der Signalprozessor umgeschaltet werden, so daß eine entsprechende Überlagerung unterbleibt. Andererseits ist es vorteilhaft in einem solchen Anwendungsfall, in dem nur an den Center-Kanal eine externe Lautsprecherbox angeschlossen wird, den Signalprozessor so umzuschalten, daß er nach einem an sich bekannten Verfahren die Basisbreite und damit die Seiteninformation in den Seitenkanälen erhöht wird. Zum Realisieren der sinnvollen Beschaltungsmöglichkeiten muß das Tonteil eines Fernsehgerätes mindestens zwischen fünf verschiedenen Betriebsarten umschaltbar sein. Bei bekannten Fernsehgeräten wird zwischen diesen Betriebsarten mit Hilfe des geräteinternen Fernbediensystems manuell umgeschaltet. Dieses ist schaltungsmäßig sehr aufwendig und für den Nutzer lästig, da die Auswahl der richtigen Betriebsart nicht ohne das Studieren einer entsprechenden Betriebsanleitung möglich ist.

In der DE-Zeitschrift: Radio Fernsehen Elektronik Nr. 11, 1994, Seiten 68, 69 und Nr. 12, 1994, Seiten 56, 57 sind beispielsweise die Fernsehgeräte ST 63-760/9 DPL und ST 72-760/9 DPL der Fa. Grundig beschrieben. Diese Geräte können mit Hilfe einer Bedienungs-Software auf eine Surround-Wiedergabe, spezielle Dolby-Betriebsarten, wie Dolby-Phantom, Dolby-3-Stereo, Pseudo-Surround oder auf eine normale Stereo-Wiedergabe eingestellt werden. Dabei erfolgt eine Bedienungsführung über den Gerätebildschirm, wobei auch die für die gewählte Betriebsart benötigte Lautsprecherkonfiguration angezeigt werden kann.

Das Audioteil dieser Fernsehgeräte enthält insgesamt sechs Leistungsverstärker, von denen nur fünf gleichzeitig aktiv sein können. Die Aufgabe der Bedienungs-Software beschränkt sich darauf, beim Prologic-Betrieb und beim 3-Stereo-Betrieb jeweils den Eingang der beiden Leistungsverstärker für den internen rechten bzw. linken Lautsprecher vom Signal R und L auf das Center-Signal zu schalten, in Abhängigkeit von der Betriebsart jeweils den Eingang der beiden Leistungsverstärker für den externen rechten bzw. linken Lautsprecher von den Signalen L bzw. R zu trennen sowie die Leistungsverstärker, die entsprechend der gewählten Betriebsart nicht benötigt werden, in den Stand-by-Betrieb zu schalten.

Das Einstellen der Betriebsarten erfolgt über Menüs unabhängig von der äußeren Lautsprecherbeschaltung.

Die Geräte verfügen über keinerlei Rückmeldeeinrichtungen für extern angeschlossene Lautsprecher. Dieses kann eine mangelhafte Audiowiedergabe zur Folge haben, wenn ein falsches Menü eingestellt ist. Beispielsweise geben die geräteinternen Lautsprecher im Prologic-Betrieb und im 3-Stereo-Betrieb immer das Center-Signal, also ein Monosignal wieder, auch wenn keine externen Lautsprecher angeschlossen sind.

Beim normalen Stereo-Betrieb erfolgt kein selbsttätiges Umschalten auf extern angeschlossene R- und L-Boxen und keine Rücknahme der Basisverbreiterung. Für die Wiedergabe des Center-Kanals sind ausschließlich die geräteinternen Lautsprecher vorgesehen. Ein Anschließen einer Center-Box ist weder im Zusammenhang mit externen R- und L-Boxen noch allein möglich.

Somit ist auch keine Betriebsweise möglich, bei der die Seiteninformation über die internen Lautsprecher und die Center-Information über eine externe Box, die sich mittig über oder unter dem Fernsehgerät befindet, wiedergegeben werden können. Darüber hinaus benötigt die bekannte Lösung mehr Leistungsverstärker, als das Audio-Wiedergabesystem Kanäle aufweist, und umfangreiche elektronische Mittel zum Umschalten der Verstärkereingänge und Stummschalten der Leistungsverstärker.

Aus der Druckschrift DE-A-4030121 ist eine Vorrichtung zu einer mehrkanaligen Audiowiedergabe bekannt, bei der sowohl im Ausgangskreis des Leistungsverstärkers für den Center-Kanal als auch im Ausgangskreis des Leistungsverstärkers für den Surround-Kanal je ein Stromdetektor liegen. Die Stromdetektoren prüfen die Impedanz über den Lautsprecheranschlüssen. Wird infolge einer hohen Lastimpedanz das Fehlen der Center-Lautsprecherbox erkannt, so schließt der entsprechende Stromdetektor eine erste Schalteranordnung und eine erste Signalverarbeitungsschaltung summiert jeweils einen Anteil des Center-Signals zu den Kanälen mit der Seiteninformation R, L. Wird das Fehlen der Surround-Boxen festgestellt, so schließt der entsprechende Stromdetektor eine zweite Schalteranordnung und eine zweite Signalverarbeitungsschaltung addiert jeweils einen Teil des Surround-Signals zu den Kanälen L und R.

Bei der bekannten Lösung ist jedem Lautsprecheranschluß eine bestimmte Funktion zugeordnet. Es ist nicht möglich, beispielsweise interne Lautsprecher in Abhängigkeit von der Beschaltung des Gerätes sowohl als Center-Lautsprecher oder als Lautsprecher für Seiteninformation zu benutzen bzw. wenn externe Center- und R-, L-Lautsprecherboxen vorhanden sind, diese vollständig abzuschalten.

Es ist deshalb Aufgabe der Erfindung eine Lösung aufzuzeigen, mit der mit geringem zusätzlichen Aufwand das manuelle Auswählen der Betriebsart einer Audioverstärkeranordnung vermieden wird.

Zum Lösen der Aufgabe geht die Erfindung von einer Audioverstärkeranordnung nach dem Oberbegriff von Anspruch 1 aus. Eine solche Anordnung beinhaltet Wiedergabekanäle mit Audio-Leistungsverstärkern, internen Lautsprechern und einen Signalprozessor, der derart umschaltbar ist, daß zum Realisieren der verschiedenen Wiedergabebetriebsarten für die Wiedergabekanäle verschiedene Audiosignale bereitgestellt werden. Die Leistungsverstärker enthalten Kanalausgänge, an denen wahlweise bezüglich der Anzahl und/oder Zuordnung verschiedene Kombinationen von Schallstrahlern mit den internen Lautsprechern und/oder externen Lautsprecherboxen zum Realisieren von verschiedenen Wiedergabebetriebsarten anschließbar sind.

Dabei erfordert ein Anschließen entsprechender externer Lautsprecherboxen an bestimmten Kanalausgängen einen Wechsel der Wiedergabebetriebsart, bei dem sich die Zuordnung der internen Lautsprecher zum Wiedergabekanal ändert und/oder der Signalprozessor umgeschaltet wird.

Erfindungsgemäß weist ein Teil der Kanalausgänge erste und zweite Schaltmittel auf, die beim Anschließen externer Lautsprecherboxen den erforderlichen Wechsel der Betriebsart selbsttätig ausführen. Dabei schalten die ersten Schaltmittel den Signalprozessor um, so daß dieser für bestimmte Leistungsverstärker eingangsseitig veränderte Audiosignale bereitstellt. Die zweiten Schaltmittel schalten die internen Lautsprecher zwischen den Kanalausgängen verschiedener Wiedergabekanäle um.

In einer speziellen Ausführungsform der Erfindung zum Realisieren einer Audioverstärkeranordnung für das Dolby-Pro-Logic-Verfahren sind neben dem Wiedergabekanal für ein Surround-Signal je ein Wiedergabekanal für ein rechtes und ein linkes Seitensignal sowie für ein Center-Signal vorhanden. Das erste Schaltmittel schaltet den Signalprozessor in eine erste Betriebsart, in der dem Seitensignal in den entsprechenden Wiedergabekanälen das Center-Signal überlagert wird, wenn weder an den Wiedergabekanälen für die Seitensignale noch am Center-Kanal eine externe Lautsprecherbox angeschlossen ist.

Wenn jedoch an einem der drei Wiedergabekanäle mindestens eine externe Lautsprecherbox angeschlossen ist, schaltet das erste Schaltmittel den Signalprozessor in eine zweite Betriebsart, in der Seitensignale ohne Überlagerung des Center-Signals übertragen werden. In einer Weiterentwicklung dieser Ausführungsform der Audioverstärkeranordnung schaltet das erste Schaltmittel den Signalprozessor in eine dritte Betriebsart um. In dieser Betriebsart verbreitert der Signalprozessor für die Seitensignale, die auf den entsprechenden Wiedergabekanälen übertragen werden, künstlich die Basisbreite, wenn an den Wiedergabekanälen für die Seitensignale keine externen Lautsprecherboxen und am Wiedergabekanal für das Center-Signal eine externe Lautsprecherbox angeschlossen ist.

Die beschriebene Ausführungsform der Erfindung gewährleistet, daß der Signalprozessor, der im vorliegenden Fall ein Dolby-Pro-Logic-Surround-Prozessor ist, in Abhängigkeit von der Beschaltung der Seitenkanäle und des Center-Kanals automatisch so umgeschaltet wird, daß er jeweils eine für die entsprechende Beschaltung optimale Signalaufbereitung durchführt. Das bedeutet, wenn die Seitenkanäle und der Center-Kanal nicht extern beschaltet sind, geben die internen Lautsprecher Seitensignale wieder, denen der Signalprozessor zum Verbessern der Mittenortung das Center-Signal überlagert. Wenn jedoch die Seitenkanäle nicht extern und der Center-Kanal extern beschaltet sind, geben die internen Lautsprecher Seitensignale wieder, bei denen der Signalprozessor durch eine an sich bekannte elektronische Vergrößerung der Seiteninformation die Basisbreite für die Seitenkanäle, das heißt, den akustisch scheinbar wirksamen Abstand der Schallstrahler, vergrößert. Sind jedoch die Seitenkanäle extern beschaltet oder der Nutzer hat eine externe HiFi-Anlage angeschlossen, so stellt der Signalprozessor Seitensignale bereit, bei denen weder das Center-Signal überlagert, noch eine Verbreiterung der Basisbreite vorgenommen wurde.

Das erste Schaltmittel für das Umschalten des Signalprozessors wird dadurch realisiert, daß die Kanalausgänge der Wiedergabekanäle für die Seitensignale sowie für das Center-Signal über ein Widerstandsnetzwerk oder Widerstands-Diodennetzwerk mit einer Gleichspannung verbunden sind, so daß Steuerspannungen verfügbar sind, die von den an den Kanalausgängen angeschlossenen Impedanzen der Schallstrahler abhängen.

Die Gleichspannung wird den Kanalausgängen über Impedanzen zugeführt, die um mehr als das Zehnfache größer sind, als die Impedanzen der Schallstrahler, die in der Regel etwa bei 8 Ohm liegen, so daß der Pegel der Steuerspannung an einem Kanalausgang von einem hohen Pegel (H) auf einen niedrigen Pegel (L) fällt, wenn eine externe Lautsprecherbox angeschlossen wird. Eine entsprechende Schaltlogik, die an den Steuerteil des verwendeten Signalprozessors angepaßt ist, wertet die Gleichspannungspegel an den Kanalausgängen aus und schaltet den Signalprozessor auf die benötigte Betriebsart um.

Eine weitere detaillierte Ausführung der Erfindung betrifft das selbsttätige Wechseln der Zuordnung bzw. Abschalten der internen Lautsprecher. Dazu weist die Audioverstärkeranordnung zweite Schaltmittel auf, die einerseits sowohl den internen rechten als auch den internen linken Lautsprecher jeweils mit dem Wiedergabekanal für das entsprechende Seitensignal verbinden, wenn an diesen Wiedergabekanälen keine externen Lautsprecherboxen angeschlossen sind.

Andererseits verbinden die zweiten Schaltmittel beide interne Lautsprecher mit dem Wiedergabekanal für das Center-Signal, wenn an den Wiedergabekanälen für die Seitensignale externe Lautsprecherboxen angeschlossen sind.

In einer speziellen Ausführungsform der Erfindung, weisen die Kanalausgänge zum Anschließen externer Lautsprecherboxen Steckkontakte auf, insbesondere spezielle Lautsprecher-Schalt-Buchsen, die im Gegensatz zu bekannten Lautsprecher-Schalt-Buchsen mit vom Kanalausgang isolierten Umschaltern verbunden sind. Diese Steckkontakte bilden die zweiten Schaltmittel.

Die Erfindung soll nachstehend an Hand eines Ausführungsbeispiels erläutert werden. Die entsprechenden Figuren zeigen im einzelnen:
- Fig. 1: eine Prinzipdarstellung einer Audioverstärkeranordnung gemäß der Erfindung, bei der keine externen Lautsprecherboxen angeschlossen sind
- Fig. 2: eine Prinzipdarstellung einer Audioverstärkeranordnung gemäß der Erfindung, bei der externe Lautsprecherboxen zur Wiedergabe der Seiteninformation angeschlossen sind
- Fig. 3: eine Prinzipdarstellung einer Audioverstärkeranordnung gemäß der Erfindung, bei der externe Lautsprecherboxen zur Wiedergabe der Center-Information angeschlossen sind

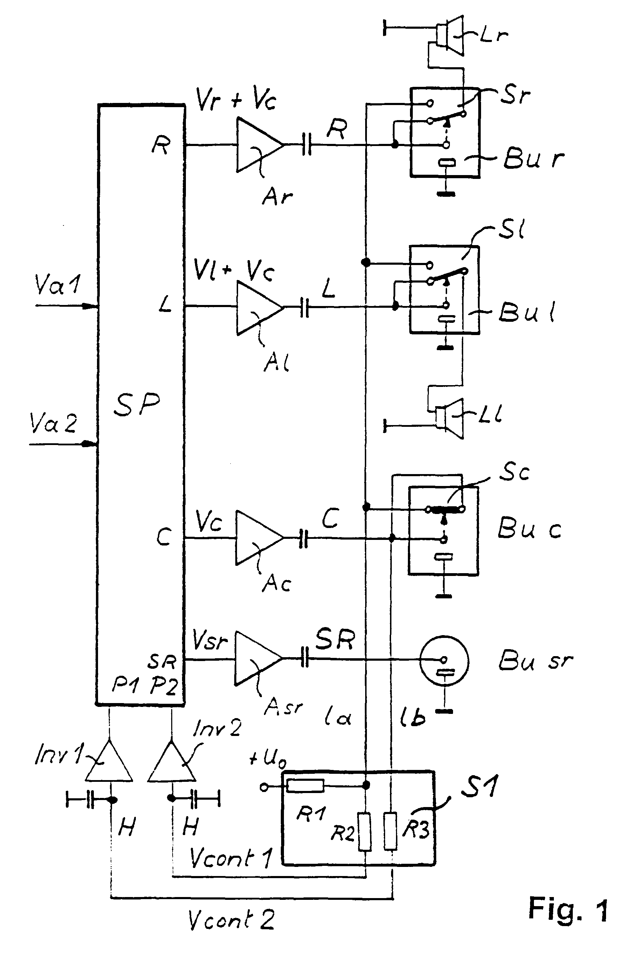

Das Ausführungsbeispiel betrifft ein Dolby-Surround-Sound-Teil für ein Fernsehgerät. Ein nicht dargestelltes Audioteil eines Fernsehgerätes gewinnt aus einem komplexen Fernsehsignal ein erstes Audiosignal Va1 und ein zweites Audiosignal Va2. Wie Fig. 1 zeigt, liegen die Audiosignale Va1 und Va2 an den Signaleingängen eines Signalprozessors SP. Der Signalprozessor SP ist ein an sich bekannter Surround-Sound-Prozessor, der aus den Audiosignalen Va1 und Va2 je ein Seitensignal Vr und Vl für einen rechten Wiedergabekanal R und einen linken Wiedergabekanal L sowie ein Center-Signal C für einen Wiedergabekanal C und ein Surroundsignal für einen Wiedergabekanal SR generiert. Jeder Wiedergabekanal R, L, C und SR weist einen Audio-Leistungsverstärker Ar, Al, Ac und Asr auf, um Schallstrahler mit einer entsprechenden Signalleistung anzutreiben. Neben den genannten Ein- bzw. Ausgängen für Audiosignale enthält der Signalprozessor einen Steuereingang P1 und einen Steuereingang P2 zum Umschalten in eine andere Wiedergabebetriebsart. Während der Signalprozessor SP, unabhängig von der Ansteuerung der Steuereingänge P1 und P2, für den Wiedergabekanal C immer ein Center-Signal Vc und für den Wiedergabekanal SR immer ein Surround-Signal Vsr generiert, bewirkt die Zufuhr von Steuerspannungen Vcont1 und Vcont 2 in entsprechenden logischen Pegelkombinationen, daß der Signalprozessor SP für die Wiedergabekanäle R und L anstelle der Seitensignale Vr und Vl andere Audiosignale generiert.

In einer ersten logischen Pegelkombination wird ein Signal Vr + Vc bzw. ein Signal Vl + Vc für die Wiedergabekanäle R und L bereitgestellt, wogegen in einer zweiten logischen Pegelkombination ein Signal Vr' und ein Signal Vl' generiert wird. Bei den Signalen Vr' und Vl' hat der Signalprozessor gegenüber den Seitensignalen Vr und Vc den Anteil der Seiteninformation erhöht. Damit wird bei der Wiedergabe die Basisbreite akustisch verbreitert.

Die soweit beschriebene Audioverstärkeranordnung entspricht den bekannten Lösungen. Die Erfindung wird durch die Beschaltung der Kanalausgänge realisiert. In der Ausführungsform, gemäß dem Ausführungsbeispiel, befinden sich an den Kanalausgängen der Wiedergabekanäle R und L je eine Steckbuchse Bur bzw. Bul zum Anschließen externer Lautsprecherboxen Br und Bl. Jede Steckbuchse Bur bzw. Bul ist mechanisch mit einem Umschalter Sr bzw. Sl derart gekoppelt, daß dieser von einer ersten Schaltstellung in eine zweite Schaltstellung umschaltet, wenn in die Steckbuchse Bur bzw. Bul ein Stecker eingeführt wird. Im Gegensatz zu herkömmlichen Schaltbuchsen, bei denen der eingeführte Stecker mit dem Umschalter Sr bzw. Sl elektrisch verbunden ist, sind die Buchsen Bur und Bul derart ausgeführt, daß der eingeführte Stecker zumindest zu den geschlossenen Schaltkontakten des Umschalters isoliert ist.

Wie Fig. 1 zeigt, sind die Umschalter Sr und Sl der Steckbuchsen Bur und Bul mit Schallstrahlern in Form von Lautsprechern Lr und Ll, die im Fernsehgerät intern rechts und links der Bildröhre angeordnet sind, verbunden. Bei den Umschaltern Sr und Sl ist jeweils ein erster Schalteranschluß mit dem Wiedergabekanal L bzw. R verbunden, so daß der Umschaltkontakt den Wiedergabekanal R bzw. L zum entsprechenden internen Lautsprecher Lr oder Ll führt, wenn sich kein Stecker in der Buchse befindet. Im Gegensatz zu den vorgenannten Steckbuchsen Bur und Bul ist an den Kanalausgang für das Center-Signal Vc eine Steckbuchse Buc angeschlossen, die in herkömmlicher Weise mechanisch mit einem Ein-/Ausschalter gekoppelt ist. Dieser ist so angeschlossen, daß der Schaltkontakt den Kanalausgang vom Wiedergabekanal C mit einer Leitung la verbindet, wenn sich in der Steckbuchse Buc kein Stecker befindet. Die Leitung la ist einerseits jeweils an den zweiten Schalteranschluß der Umschalter Sr und Sl angeschlossen und andererseits über einen Widerstand R1 mit einer Gleichspannung + Uo verbunden. Die Leitung la sowie eine zweite Leitung Ib, die direkt an den Kanalausgang für das Center-Signal Vc angeschlossen ist, dienen in Verbindung mit dem Widerstandsnetzwerk R1, R2 und R3 und der Gleichspannung + Uo zum Erzeugen der Steuerspannungen Vcont1 und Vcont2, die über Inverter Inv1 und Inv2 den Steuereingängen P1 und P2 zugeführt werden. In der Betriebsart, entsprechend Fig. 1, liegen die beiden Steuerspannungen Vcont1 und Vcont2 auf hohem Pegel H. Diese entspricht der ersten logischen Pegelkombination und der Signalprozessor generiert das Signal Vr + Vc für den Wiedergabekanal R und das Signal Vl + Vc für den Wiedergabekanal L. Da keine externen Lautsprecherboxen angeschlossen sind, gewährleistet die erste Schalterstellung der Umschalter Sr und Sl, daß die internen Lautsprecher Lr und Ll sowohl Seitensignale Vr bzw. Vl als auch das Center-Signal abstrahlen.

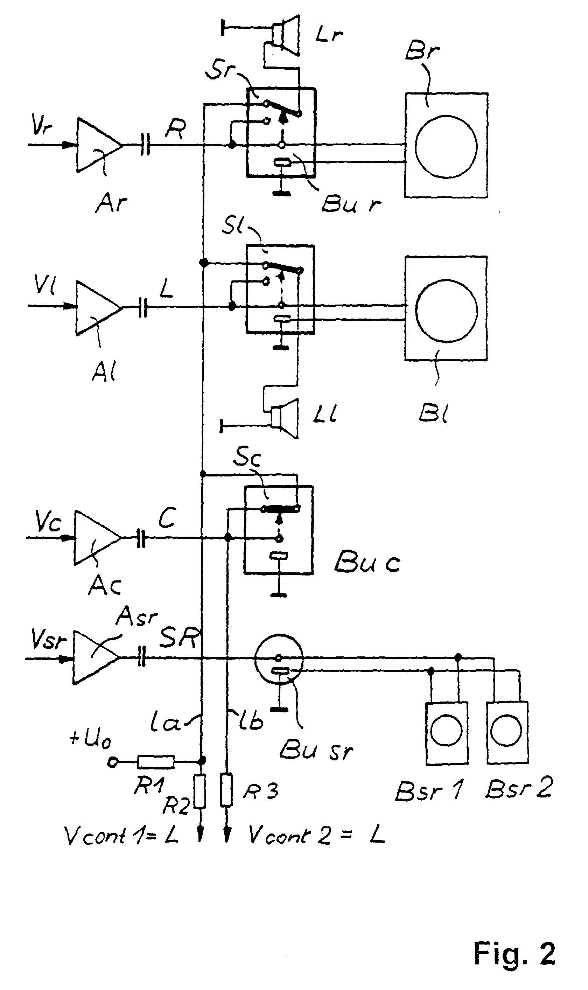

Die Fig. 2 zeigt einen Ausschnitt der Audioverstärkeranordnung gemäß der Erfindung. Im Unterschied zu Fig. 1 sind bei diesem Ausführungsbeispiel externe Lautsprecherboxen Br und Bl an die Kanalausgänge der Wiedergabekanäle R und L angeschlossen. Das Einführen der Stecker von den Lautsprecherboxen Br und Bl in die Steckbuchsen Bur und Bul bewirkt, daß die Umschalter Sr und Sl in die zweite Schaltstellung gesetzt werden. Dabei haben die internen Lautsprecher Lr und Ll automatisch mit der Leitung la Verbindung. Diese liegt über Schalter Sc am Wiedergabekanal C.
Im Ergebnis dessen geben die externen Lautsprecherboxen Br und Bl Seiteninformation wieder, während die internen Lautsprecher Lr und Ll zur Wiedergabe der Center-Information benutzt werden.
Da bei dieser Wiedergabebetriebsart die niedrige Impedanz der Lautsprecher Lr und Ll mit den Leitungen la und lb verbunden sind, fällt am Widerstand R1 der überwiegende Teil der Gleichspannung +Uo ab. Damit liegen bei dieser Betriebsart die beiden Steuerspannungen Vcont1 und Vcont2 auf niedrigem Pegel L. Dieses entspricht der logischen Pegelkombination, bei der der Signalprozessor für den Wiedergabekanal R das Seitensignal Vr und für den Wiedergabekanal L das Seitensignal Vl generiert.

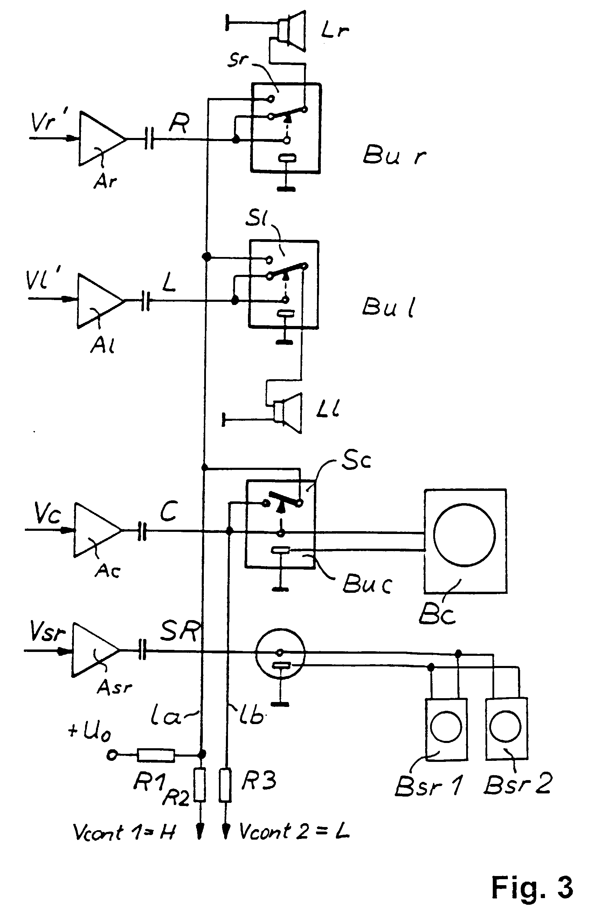

Im Gegensatz dazu zeigt Fig. 3 ein Ausführungsbeispiel bei dem neben den externen Lautsprecherboxen Bsr1 und Bsr2 eine externe Lautsprecherbox Bc für die Wiedergabe des Center-Signals Vc angeschlossen ist. In einer weiteren, nicht dargestellten Wiedergabebetriebsart bei der an allen Wiedergabekanälen externe Lautsprecher angeschlossen sind, trennt der Schalter Sc die internen Lautsprecher Lr und Ll vom Wiedergabekanal C.

## Patentansprüche

1. Audioverstärkeranordnung für mehr als zwei Wiedergabekanäle (R, L, C, SR)
- mit einem Signalprozessor (SP), der zum Realisieren verschiedener Wiedergabebetriebsarten umschaltbar ist, um verschiedene Audiosignale (Vr, Vl, Vc, Vsr, Vr+Vc, Vl+Vc) für die Wiedergabekanäle (R, L, C, SR) bereitzustellen,
- mit internen Lautsprechern (Lr, Ll)
- und mit Leistungsverstärkern (Ar, Al, Ac, Asr) in den Wiedergabekanälen, an welchen wahlweise verschiedene Kombinationen von Schallstrahlern mit den internen Lautsprechern (Lr, Ll) und/oder mit externen Lautsprecherboxen (Br, Bl, Bc, Bsr1, Bsr2) zum Realisieren der verschiedenen Wiedergabebetriebsarten anschließbar sind,
wobei ein Anschließen von entsprechenden externen Lautsprecherboxen (Br, Bl, Bc) an bestimmte Leistungsverstärker einen Wechsel der Wiedergabebetriebsart erfordert, bei dem sich die Funktion der internen Lautsprecher (Lr, Ll) ändert und/oder der Signalprozessor (SP) umgeschaltet wird,
**dadurch gekennzeichnet**, daß an den Ausgängen der
Leistungsverstärker erste und zweite Schaltmittel vorhanden sind, die beim Anschließen externer Lautsprecherboxen den erforderlichen Wechsel der Betriebsart selbsttätig ausführen, wobei die ersten Schaltmittel den Signalprozessor umschalten, so daß dieser für bestimmte Leistungsverstärker veränderte Audiosignale bereitstellt und wobei die zweiten Schaltmittel die internen Lautsprecher (Lr, Ll) an verschiedene Ausgänge der Leistungsverstärker schalten.

2. Audioverstärkeranordnung nach Anspruch 1, dadurch gekennzeichnet,
daß mindestens je ein Wiedergabekanal für ein rechtes und ein linkes Seitensignal (Vr, Vl) sowie für ein Center-Signal (Vc) vorhanden sind,
daß das erste Schaltmittel (S1) den Signalprozessor (SP) in eine erste Betriebsart schaltet, in der den Seitensignalen (Vr, Vl) das Center-Signal (Vc) überlagert wird, wenn an keinem der drei Wiedergabekanäle eine externe Lautsprecherbox (Br, Bl, Bc) angeschlossen ist
und daß das erste Schaltmittel (S1) den Signalprozessor (SP) in eine zweite Betriebsart schaltet, in der Seitensignale ohne Überlagerung des Center-Signals übertragen werden, wenn an einem der drei Wiedergabekanäle mindestens eine externe Lautsprecherbox (Br, Bl, Bc) angeschlossen ist.

3. Audioverstärkeranordnung nach Anspruch 2, dadurch gekennzeichnet, daß das erste Schaltmittel (S1) den Signalprozessor (SP) in eine dritte Betriebsart schaltet, bei der in der Basisbreite künstlich verbreiterte Seitensignale (Vr', Vl') übertragen werden, wenn an den Wiedergabekanälen für die Seitensignale (Vr, Vl) keine externen Lautsprecherboxen (Br, Bl) und am Wiedergabekanal für das Center-Signal eine externe Lautsprecherbox (Bc) angeschlossen ist.

4. Audioverstärkeranordnung nach Anspruch 2, dadurch gekennzeichnet, daß zum Realisieren des ersten Schaltmittels (S1) für das Umschalten des Signalprozessors (SP) die Kanalausgänge der Wiedergabekanäle für die Seitensignale (Vr, Vl) sowie für das Center-Signal (Vc) über ein Widerstandsnetzwerk oder ein Widerstands-Diodennetzwerk mit einer Gleichspannung verbunden sind, so daß Steuerspannungen (Vcont1, Vcont2) verfügbar sind, die einen hohen Pegel (H) aufweisen, wenn am entsprechenden Wiedergabekanal keine externe Lautsprecherbox (Br, Bl, Bc) angeschlossen ist, und die einen niedrigen Pegel (L) aufweisen, wenn am entsprechenden Wiedergabekanal mindestens eine externe Lautsprecherbox (Br, Bl, Bc) angeschlossen ist und daß (SP) eine Schaltlogik vorhanden ist, die den Signalprozessor (SP) entsprechend der logischen Schaltzustände der Steuerspannungen (Vcont1, Vcont2) auf die benötigte Wiedergabebetriebsart umschaltet.

5. Audioverstärkeranordnung nach Anspruch 2, dadurch gekennzeichnet,
daß die zweiten Schaltmittel (Sr, Sl) jeden der internen Lautsprecher (Lr, Ll) mit dem entsprechenden Wiedergabekanal für die Seitensignale (Vr, Vl) verbinden, wenn an diesen Wiedergabekanälen keine externen Lautsprecherboxen (Br, Bl) angeschlossen sind,
und daß die zweiten Schaltmittel (Sr, Sl) beide internen Lautsprecher (Lr, Ll) mit dem Wiedergabekanal für das Center-Signal (Vc) verbinden, wenn an den Wiedergabekanälen für die Seitensignale (Vr, Vl) externe Lautsprecherboxen (Br, Bl) angeschlossen sind.

6. Audioverstärkeranordnung nach Anspruch 5, dadurch gekennzeichnet, daß die zweiten Schaltmittel (Sc) die Verbindung zu den internen Lautsprechern (Lr, Ll) öffnen, wenn am Wiedergabekanal für das Center-Signal eine externe Lautsprecherbox (Bc) angeschlossen ist.

7. Audioverstärkeranordnung nach Anspruch 5, dadurch gekennzeichnet, daß die Kanalausgänge Steckkontakte (Bur, Bul, Buc) zum Anschließen externer Lautsprecherboxen (Br, Bl, Bc) aufweisen, die mit vom Kanalausgang isolierten Umschaltern derart gekoppelt sind, daß diese beim Anschließen von externen Lautsprecherboxen (Bur, Bul, Buc) betätigt werden und daß diese Umschalter die zweiten Schaltmittel (Sr, Sl, Sc) darstellen.

## Claims

1. Audio amplifier arrangement for more than two reproduction channels (R, L, C, SR)
- having a signal processor (SP) that can be switched over to implement various reproduction operating modes in order to provide various audio signals (Vr, Vl, Vc, Vsr, Vr+Vc, Vl+Vc) for the reproduction channels (R, L, C, SR),
- having internal loudspeakers (Lr, Ll),
- and having power amplifiers (Ar, Al, Ac, Asr) in the reproduction channels, to which loudspeakers various combinations of sound radiators comprising the internal loudspeakers (Lr, Ll) and/or comprising external loudspeaker cabinets (Br, Bl, Bc, Bsr1, Bsr2) can optionally be connected to implement the various reproduction operating modes,
connecting corresponding external loudspeaker cabinets (Br, Bl, Bc) to certain power amplifiers requiring a change in the reproduction operating mode, in which change the function of the internal loudspeakers (Lr, Ll) changes and/or the signal processor (SP) is switched over,
**characterized in that** there are present at the outputs of the power amplifiers first and second switching means that automatically perform the required change in operating mode when external loudspeaker cabinets are connected, the first switching means switching over the signal processor so that it provides modified audio signals for certain power amplifiers and the second switching means switching the internal loudspeakers (Lr, Ll) to various outputs of the power amplifiers.

2. Audio amplifier arrangement according to Claim 1, characterized
in that at least one reproduction channel is present in each case for a right-hand and a left-hand side signal (Vr, Vl) and also for a centre signal (Vc),
in that the first switching means (S1) switches the signal processor (SP) to a first operating mode in which the centre signal (Vc) is superimposed on the side signals (Vr, Vl) if an external loudspeaker cabinet (Br, Bl, Bc) is not connected to any of the three reproduction channels,
and in that the first switching means (S1) switches the signal processor (SP) to a second operating mode in which side signals are transmitted without superimposition of the centre signal if at least one external loudspeaker cabinet (Br, Bl, Bc) is connected to one of the three reproduction channels.

3. Audio amplifier arrangement according to Claim 2, characterized in that the first switching means (S1) switches the signal processor (SP) to a third operating mode in which side signals (Vr', Vl') artificially expanded in base width are transmitted if no external loudspeaker cabinets (Br, Bl) are connected to the reproduction channels for the side signals (Vr, Vl) and an external loudspeaker cabinet (Bc) is connected to the reproduction channel for the centre signal.

4. Audio amplifier arrangement according to Claim 2, characterized in that, to implement the first switching means (S1) for switching over the signal processor (SP), the channel outputs of the reproduction channels for the side signals (Vr, Vl) and also for the centre signal (Vc) are connected to a direct voltage via a resistor network or a resistor/diode network so that control voltages (Vcont1, Vcont2) are available that have a high level (H) if no external loudspeaker cabinet (Br, Bl, Bc) is connected to the corresponding reproduction channel and that have a low level (L) if at least one external loudspeaker cabinet (Br, Bl, Bc) is connected to the corresponding reproduction channel and in that a switching logic is present that switches over the signal processor (SP) to the required reproduction operating mode corresponding to the logic switching states of the control voltages (Vcontl, Vcont2).

5. Audio amplifier arrangement according to Claim 2, characterized in that the second switching means (Sr, Sl) connect each of the internal loudspeakers (Lr, Ll) to the corresponding reproduction channel for the side signals (Vr, Vl) if no external loudspeaker cabinets (Br, Bl) are connected to said reproduction channels, and in that the second switching means (Sr, Sl) connect both internal loudspeakers (Lr, Ll) to the reproduction channel for the centre signal (Vc) if external loudspeaker cabinets (Br, Bl) are connected to the reproduction channels for the side signals (Vr, Vl).

6. Audio amplifier arrangement according to Claim 5, characterized in that the second switching means (Sc) open the connection to the internal loudspeakers (Lr, Ll) if an external loudspeaker cabinet (Bc) is connected to the reproduction channel for the centre signal.

7. Audio amplifier arrangement according to Claim 5, characterized in that the channel outputs have plug contacts (Bur, Bul, Buc) for connecting external loudspeaker cabinets (Br, Bl, Bc) that are coupled to changeover switches isolated from the channel output in such a way that the latter are actuated when external loudspeaker cabinets (Bur, Bul, Buc) are connected and in that said changeover switches are the second switching means (Sr, Sl, Sc).

## Revendications

1. Assemblage amplificateur audio pour plus de deux canaux de reproduction (R, L, C, SR)
- avec un processeur de signaux (SP) qui peut être commuté pour réaliser différents modes opératoires de reproduction afin de mettre à disposition différents signaux audio (Vr, Vl, Vc, Vsr, Vr+Vc, Vl+Vc) pour les canaux de reproduction (R, L, C, SR),
- avec des haut-parleurs internes (Lr, Ll)
- et avec des amplificateurs de puissance (Ar, Al, Ac, Asr) dans les différents canaux de reproduction, auxquels on peut raccorder au choix différentes combinaisons de radiateurs acoustiques avec les haut-parleurs internes (Lr, Ll) et/ou des enceintes externes (Br, Bl, Bc, Bsr1, Bsr2) pour réaliser les différents modes opératoires de reproduction,
le raccordement des enceintes externes (Br, Bl, Bc) correspondantes à certains amplificateurs de puissance nécessitant un changement du mode opératoire de reproduction, dans lequel la fonction des haut-parleurs internes (Lr, Ll) change et/ou le processeur de signaux (SP) est commuté,
caractérisé en ce qu'aux sorties des amplificateurs de puissance, il existe des premiers et deuxièmes moyens de commutation qui effectuent automatiquement le changement de mode opératoire nécessaire lors du raccordemént d'enceintes externes, les premiers moyens de commutation commutant le processeur de signaux de sorte que celui met à disposition des signaux audio modifiés pour certains amplificateurs de puissance, et les deuxièmes moyens de commutation commutant les haut-parleurs internes (Lr, Ll) à différentes sorties des amplificateurs de puissance.

2. Assemblage amplificateur audio selon la revendication 1, caractérisé
en ce qu'il existe respectivement au moins un canal de reproduction pour un signal latéral droit et un signal latéral gauche (Vr, Vl) ainsi que pour un signal central (Vc),
en ce que les premiers moyens de commutation (S1) commutent le processeur de signaux (SP) dans un premier mode opératoire dans lequel le signal central (Vc) est superposé aux signaux latéraux (Vr, Vl), si aucune enceinte externe (Br, Bl, Bc) n'est raccordée à l'un des trois canaux de reproduction,
et en ce que les premiers moyens de commutation (S1) commutent le processeur de signaux (SP) dans un deuxième mode opératoire dans lequel des signaux latéraux sans superposition du signal central sont transmis si à l'un des trois canaux de reproduction est raccordée au moins une enceinte externe (Br, Bl, Bc).

3. Assemblage amplificateur audio selon la revendication 2, caractérisé en ce que les premiers moyens de commutation (S1) commutent le processeur de signaux (SP) dans un troisième mode opératoire dans lequel des signaux latéraux (Vr', Vl') élargis artificiellement en largeur de base sont transmis si aucune enceinte externe (Br, Bl) n'est raccordée aux canaux de reproduction pour les signaux latéraux (Vr, Vl) et si une enceinte externe (Bc) est raccordée au canal de reproduction pour le signal central.

4. Assemblage amplificateur audio selon la revendication 2, caractérisé en ce que pour réaliser les premiers moyens de commutation (S1) pour la commutation du processeur de signaux (SP), les sorties de canal des canaux de reproduction pour les signaux latéraux (Vr, Vl) ainsi que pour le signal central (Vc) sont reliées par l'intermédiaire d'un réseau de résistances ou d'un réseau de diodes de résistance avec une tension continue de sorte que des tensions de commande (Vcont1, Vcont2) sont disponibles, qui présentent un niveau élevé (H) lorsqu'aucune enceinte externe (Br, Bl, Bc) n'est raccordée au canal de reproduction correspondant, et qui présentent un niveau bas (L) lorsqu'au canal de reproduction correspondant est raccordée au moins une enceinte externe (Br, Bl, Bc), et de sorte qu'il existe une logique de commutation (SP) qui commute le processeur de signaux (SP) selon les états de commutation logiques des tensions de commande (Vcont1, Vcont2) sur le mode opératoire de reproduction nécessaire.

5. Assemblage amplificateur audio selon la revendication 2, caractérisé
en ce que les deuxièmes moyens de commutation (Sr, Sl) relient chacun des haut-parleurs internes (Lr, Ll) au canal de reproduction correspondant pour les signaux latéraux (Vr, Vl) lorsqu'aucune enceinte externe (Br, Bl) n'est raccordée à ces canaux de reproduction,
et en ce que les deuxièmes moyens de commutation (Sr, Sl) relient les deux haut-parleurs internes (Lr, Ll) au canal de reproduction pour le signal central (Vc) lorsque des enceintes externes (Br, Bl) sont raccordées aux canaux de reproduction pour les signaux latéraux (Vr, Vl).

6. Assemblage amplificateur audio selon la revendication 5, caractérisé en ce que les deuxièmes moyens de commutation (Sc) ouvrent la connexion aux haut-parleurs internes (Lr, Ll) lorsqu'une enceinte externe (Bc) est raccordée au canal de reproduction pour le signal central.

7. Assemblage amplificateur audio selon la revendication 5, caractérisé en ce que les sorties de canal présentent des contacts à fiches (Bur, Bul, Buc) pour raccorder des enceintes externes (Br, Bl, Bc) qui sont couplés à des commutateurs isolés par rapport à la sortie de canal de telle sorte que ceux-ci sont actionnés lors du raccordement d'enceintes externes (Bur, Bul, Buc) et de sorte que ces commutateurs réalisent les deux moyens de commutation (Sr, Sl, Sc).
